Europäisches Patentamt

European Patent Office

Office européen des brevets

(11) Publication number: **0 382 861**
**A2**

# EUROPEAN PATENT APPLICATION

(21) Application number: **89102450.7**

(22) Date of filing: **13.02.89**

(51) Int. Cl.5: **C08L 23/26, C08L 23/04, C08L 101/08, //A43B23/00, A41B1/08**

(43) Date of publication of application:
**22.08.90 Bulletin 90/34**

(84) Designated Contracting States:
**DE ES FR GB IT**

(71) Applicant: **BRITISH UNITED SHOE MACHINERY LIMITED**
**PO Box 88 Ross Walk**
**Belgrave Leicester LE4 5BX(GB)**
(84) **DE FR GB IT**

Applicant: **USM Espana S.A.**
**Berenguer de Paiou, 64**
**E-08027 Barcelona(ES)**
(84) **ES**

(72) Inventor: **Simmonds, Robert Charles, Jr.**
**352 Ipswich Road**
**Boxford Massachusetts 01921(US)**

(74) Representative: **Atkinson, Eric**
**c/o British United Shoe Machinery Limited**
**P.O. Box 88 Ross Walk**
**Belgrave Leicester LE4 5BX(GB)**

(54) **Heat-fusible flowable particulate materials.**

(57) A heat-fusible flowable particulate material for providing fused polymeric three-dimensional articles comprise a predominant component in the form of a heat-fusible flowable substantially non-agglomerating polymeric powder and at least one secondary component in the form of a polymeric powder. The secondary component is mixed with said predominant component and is miscible or reactive with it to form, when fused, a solution with the predominant component at the interface between said predominant component and said secondary component. The two components form, when fused, domains of each material and the interaction takes place at the abutment between the domains. The secondary component is in quantities such that there is a detectable difference in stiffness and/or adhesive capabilities between the predominant polymeric component without the secondary polymeric component and the predominant polymeric component with the secondary polymeric component added.

## HEAT-FUSIBLE FLOWABLE PARTICULATE MATERIALS

This invention relates to heat-fusible flowable particulate materials from which fused polymeric articles can be produced, said material comprising a predominant component in the form of a heat-fusible flowable substantially non-agglomerating polymeric powder.

It is known to utilise heat-fusible flowable particulate polymeric materials in producing three-dimensional polymeric articles, e.g. shoe stiffeners: see e.g. GB-B 2136324, in which is described a method whereby three-dimensional polymeric articles are produced by depositing or otherwise arranging a three-dimensional pattern of a polymeric material in powder form on a surface of a preferably movable receiving belt or web. The pattern of polymeric powder is then transported to a heating station where the powder is fused, and the fused mass is then transported to a cooling station where a substrate may be pressed on or otherwise joined to the surface of the mass. At the cooling station the fused three-dimensional polymeric article may be lifted or otherwise removed from the receiving belt by a transfer mechanism. The polymeric powders used in carrying out such a method include polyolefins, polyesters, polyamides and polyurethanes.

Particulate polymeric materials for use in the manufacture of such articles as aforesaid are also disclosed in EP-A 0206446, which materials comprise fusible polymeric components comprising non-ionomeric or ionomeric polyolefins together with release agents, antistatic agents and anti-agglomerating agents. When these materials are heated to a temperature for fusing the material to form a fused polymeric mass, the mass releases easily from the receiving surface upon which it has been applied to permit easy removal.

It will be appreciated that the nature of the polymer deposited upon the web dictates the stiffness and adhesiveness of the fused mass and thus of the article. It will further be appreciated that for different applications different stiffness and/or adhesiveness may be required.

It is thus the object of the present invention to provide heat-fusible flowable particulate materials having a predominant component of known stiffness and adhesiveness, but wherein the stiffness and/or adhesiveness is modified according to the requirements of articles to be produced therefrom.

This object is resolved in accordance with the present invention by the addition to said predominant component of at least one secondary component in the form of a polymeric powder which is miscible or reactive with the predominant component, upon application of heat to the mixture at or above the fusion temperature of the predominant component, so as to form a solution with the predominant component at the interfaces between the particles of the predominant and secondary compondents, the ratio of the secondary component(s) to the predominant component determining the adhesiveness and/or stiffness of the fused articles produced.

It has been found that in the material in accordance with the invention by blending the predominant and secondary components a combination of their physical properties is achieved such that a synergism is accomplished which exceeds the expected contributions of the individual components, where the components to be blended together are miscible or reactive with each other, that is to say, where the individual powder granules adhere to each other when fused, either by forming as solution of the individual components or by chemical reaction, or both. More particularly, in the former case the solution is formed at the point of adherence of at least the peripheries of the predominant polymeric component and the secondary polymeric component, while in the latter case the chemical reaction occurs at least at the points of contact of the two components. By contrast, in many fusion processes, e.g. those described in the patents mentioned previously, the granules of polymer do not flow (migrate) to any appreciable degree as they are being fused or melted, but rather they remain as individual domains, and the domains remain in place in the fused mass. In such cases optimum physical properties are not achieved, as is the case where the domains are fused together, or at least the abutting peripheries of individual granules are thus fused.

Preferably in materials in accordance with the invention the quantities of the secondary polymeric component, at the lower end of the range, should be such that there is a detectable difference in stiffness and/or adhesive capabilities between the predominant polymeric component without the secondary polymeric component and the predominant polymeric component with the secondary polymeric compondent added, while at the upper end, the quantity of the secondary polymeric component is less than 50% by weight of the material; above such quantity the secondary polymeric component of course becomes predominant.

The polymers chosen must be compatible, that is, they must adhere to one another when heated and fused. Thus in the case of miscibility diffusion of the miscible polymers (which may or may not be of similar chemical structures) must take place to form a single phase solution at least at the interface between the two polymers thereby allowing the two components to form a single structure, bonded together much as

2

one would consider the bonding of the components of an alloy. In the case of reactivity on the other hand, a reaction must take place between chemical groups occurring naturally in the polymers or added thereto specifically for that purpose. Such diffusion or reaction, as the case may be, occurs during the melting at the interface between the individual particles and allows a mutual wetting of the polymer powders; any individual domains of the components which do not combine and fuse to form a solid solution individually contribute their respective properties of stiffness and/or adhesiveness.

The fused (formerly particulate) mixture now becomes a mixture of domains of two (or more) polymer types which are held together by an altered polymer if reactivity has been involved, or simply as components of a solid solution in the case of miscibility. Thus the individual domains of the predominant and secondary polymeric components remain intact, except where they abut.

There now follows a detailed description of various examples of heat-fusible flowable particulate materials in accordance with the invention, each of which involves the use of a predominant component of a polymeric powder which is used to form polymeric reinforcing or stiffening elements for footwear such as counters, box toes or the like. Preferred predominant polymeric components for footwear stiffener reinforcement elements are ionomeric polyolefins, particularly those of the type described in detail in US-A 3264272. Essentially, the polymers disclosed in that patent are ionomeric copolymers comprising ethylene and polymerizable monomers containing carboxylic acids. These preferred ionomeric polyolefin materials are sold commercially by E.I. DuPont DeNemours and Company under the registered trademark "Surlyn".

Other polymeric powders useful as the predominant polymeric component in preparing stiffeners or reinforcing elements are non-ionomeric polyolefins such as polyethylene, polypropylene and the like, and copolymers of olefins with such monomers as vinyl acetate, ethyl acrylate, and the like. Ethylene copolymers of the type described in US-A 3239370 are also suitable in the practice of the invention, as are mixtures of polymers and copolymers mentioned before. Also useful are high and low molecular weight polyamides; exemplary of such polyamides is Nylon sold commercially under that trademark by E. I. DuPont DeNemours and Company.

The particle size of the polymeric powder for footwear stiffeners or reinforcing elements can vary and suitable particle sizes are in the range of 10 to 200 U.S. standard sieve size. Particular preferred particle sizes for Surlyn ionomeric olefin copolymer powders are in the range of 20 to 60 U.S. standard sieve size.

When the polymeric materials are blended, and the blended polymeric materials are fused into a molten mass, it is believed that individual domains of the predominant polymeric component and of the secondary polymeric component are formed. The individual domains locate adjacent to each other and form a solution (or a product of a chemical reation if reactive components are used) at their interfaces since the granules that constitute the polymeric powders do not flow or migrate to any appreciable degree.

Preferred secondary polymeric components (when polyolefins are the predominant component) where it is the case of increasing stiffness are polyamides, polyamide/polyolefin, reactive polystyrene/polyolefin melt blends (prepared by extruder blending and subsequent grinding into powder). The polyamides typically are Nylon 6 such as DuPont Zytel 101 or Allied Capron 8200. The preferred reactive polystyrene is Dow XUS-400566.01 and the preferred polyolefin is DuPont Surlyn 8941. Where it it a case of increasing adhesiveness in a polyolefin powder such as DuPont 8941, on the other hand, preferably DuPont Nucrel 599 or Dow Primacor 5991 is used as a secondary polymeric component. Polybutylene, e.g. Shell 8510, has been found to increase the adhesiveness and flexibility of polypropylene, and a reactive polymer such as Dow polyethyloxazoline XAS10874.01 has been found to aid compatibility for an additional polymer which is not necessarily miscible or reactive with the predominant polymeric component.

In the previously mentioned EP-A 0206556 a material is described which comprises, in addition to a polymeric particulate material, a suitable antistatic agent, silicone release agent, and/or anti-agglomeration agent. Such a material may also in accordance with the present invention be used as the predominant component.

More particularly anti-static agents are known in the art and their performance characteristics are well defined. Most polymeric materials have good electrical insulating properties but because of their non-conductivity they easily acquire but do not readily lose static electrical charges. The preferred anti-static agents used are external antistats which operate primarily by conductance. They include dissolved ions and are present on the surface of the polymeric powder and are hygroscopic. Accordingly, they provide a conductive path consisting of a thin layer of water which the antistat absorbs from the atmosphere onto the surface of the polymeric powder. The conductivity of the absorbed water is significantly increased by the presence of the dissolved ions thereby increasing the overall effectiveness of the antistat. Preferred external antistats include cationic compounds, anionic compounds and non-ionic compounds. Cationic antistat compounds include a quaternary ammonium or phosphorium salts in which the quaternary group may also form part of a ring (e.g. imiodizoline), the anion may be chloride or meta-sulphate for example. Anionic antistat compounds include alkyl sulphates, sulphonates, phosphates, dithiocarbamates and carboxylates; the cations are usually alkali metals or alkaline earth metals. Non-ionic antistat compounds include polyethylene glycol esters or ethers, fatty acid esters or ethylamides, mono- and diglycerides and hydroxyethylated fatty amines. Especially preferred antistats are quaternary ammonium salts internal antistats or electrical fields or other techniques can also reduce the static charges on polymeric materials of the invention but external antistats present the most inexpensive, effective and convenient manner for minimizing the effects of static changes in the polymeric powders.

Preferred release agents are silicone mould release agents which are generally organopolysiloxanes having low surface tension so that the agent can sufficiently wet surfaces to provide release of fused polymeric articles from surfaces carrying the articles. The especially preferred release agents are "paintable" silicones. Paintable silicone release agents need not be removed or are more readily removed from the surface of the fused article in order to effectively apply paints or adhesives to the surface. Obviously, if removal of the release agent from the surface of the fused article is not contemplated or needed, non-paintable silicone release agents can be suitably employed. Preferred silicone release agents are at least partially miscible in the anti-static agent at least at the fusion temperature of the predominant component. Paintable alkyl and/or aryl polysiloxane release agents are especially preferred in the practice of the present invention and such release agents are commercially available and known to the art.

Anti-agglomeration (anti-caking, anti-bridging) or dryer or flow promoter agents that are useful are those which can be substantially uniformly dispersed in or carried by the monomolecular layer of the anti-static and release agent mixture coating the polymeric material. Essentially, the function assigned the anti-agglomeration agent is to hold the individual polymer particles apart and prevent intimate contact between the particles and to "lubricate" the particle surface to provide "bearings" upon which the individual particles can migrate relative to each other. The anti-agglomeration agents that are useful are those which will at least soften and preferably melt at or below the fusion temperature of the predominant component. Preferred anti-agglomeration agents are organometallic soaps, fatty acids and waxes which will melt at or below said fusion temperature. Metallic stearates, particularly zinc or magnesium stearates, are the especially preferred anti-agglomeration agents.

Depending upon the end use of the polymeric article, pigments and/or fillers and/or other such additives may also be included in the polymeric powder and/or mixed with the polymeric powder.

The invention as well as manners for making and using the invention will be more fully appreciated from the following non-limiting Examples presented for the purpose of illustrating the invention.


EXAMPLE I - ADHESION ENHANCEMENT

| Surlyn 8941 powder | 160 Kg |
| Nucrel 599 powder | 40 Kg |
| Anti-static Agent | 276 grams |
| Release Agent | 138 grams |
| Anti-Agglomeration Agent | 1076 grams |

The Surlyn and Nucrel ingredients (constituting respectively the predominant and a secondary component) were mixed in a Patterson-Kelley "V" blender at room temperature for 5 minutes at an initial speed of about 25 rpm and at a beater speed of 2160 rpm. The mixer was stopped and the release agent and the anti-static agent were then added to said ingredients and mixing was resumed at the same speeds. Mixing continued for 35 minutes at which time the mixer was stopped and the anti-agglomerating agent was added. Mixing was then again resumed for 5 to 10 minutes, at which point the mixing was considered complete.

1. The SURLYN 8941 powder was ground to pass through a #20 U.S. standard sieve.

2. Nucrel, which is an ethylene methacrylic acid copolymer manufactured by Dupont, was ground to a #20 sieve size as above.

3. The anti-static agent was Witco AL-22 which is a modified quaternary ammonium chloride derivative and sold by Argus Chemical Division.

4. The release agent was Dow Corning 230 Fluid which is an alkymethl polysiloxane sold by Dow Corning Corporation. Dow Corning 230 Fluid is a paintable release agent.

5. The anti-agglomorating agent was zinc stearate sold by Petrochemicals Company Incorporated of Fort Worth, Texas under the tradename of PETRAC ZN-44HA. The zinc stearate had a melting point of from about 115°C to about 125°C.

The adhesive bond strength, achieved after application to a standard cloth substrate, of a sample with only Surlyn was 0.525 N/mm in peel whereas the bond strength of a sample having the Nucrel and Surlyn was 0.840 N/mm.


## EXAMPLE II - ADHESION ENHANCEMENT


Example I was repeated but 40 Kg of Primacor 5991 was substituted for the Nucrel. Primacor 5991 is an ethylene acrylic acid copolymer and is sold by Dow Chemical Company of Midland, Michigan. The bond strength of Surlyn-based samples modified with Primacor was 0.858 N/mm.


## EXAMPLE III - ADHESION ENHANCEMENT


4.45 Kg of polybutylene (8510 by Shell Chemical Company of Houston, Texas) and 4.45 Kg of polypropylene (SB 382 manufactured by Hercules Chemical Company of Wilmington, Delaware) were mixed together with 6 grams of the release agent, 6 grams of the anti-static agent and 12 grams of the anti-agglomorating agent. The procedure used was that set out in Example I.

A more flexible, less stiff and better adhering product was produced. The adhesion in peel against the "Surlyn only" standard of Example I was 0.5 for the plain polypropylene and 2.0 for the mixture.


## EXAMPLE IV - STIFFNESS INCREASE


160 Kg of Surlyn was mixed with 40 Kg of Capron 8200 (sold by Allied Signal Company of Morristown, New Jersey). Capron 8200 is a polyamide. The anti-static agent and the release agent and anti-agglomerating agent described previously were added in quantities similar to those described in Example I above. The stiffness of the product was 1.4, based upon a reference point of 1.0 for Surlyn 8941 alone. Adhesion against the standard cloth of Example I was 0.508 N/mm.

While the preferred embodiment of the invention involves the preparation of reinforcing materials for shoe stiffener materials as described, the materials in accordance with this invention can be used to provide various fused polymeric articles, e.g. reinforcing or stiffening elements for apparel such as shirts, sports clothing or for sports equipment such as pads, gloves, caps with visors or the like. Accordingly, the polymeric materials can provide a wide variety of three-dimensional polymeric articles having various sizes, shapes and end uses. Moreover, in accordance with the present invention, the adhesiveness and/or stiffness of these materials can readily be varied according to the particular end use thereof. Furthermore, where the material incorporates a powder as disclosed in EP-A 0206446, the fused article can readily be removed from a receiving surface on which the article has been formed while the temperature of the fused mass is near or above the Vicat temperature of the polymeric materials, that is to say, at such temperatures such articles are nonetheless dimensionally stable, viz. although not completely solidified, they will not undergo significant distortion such as elongation or tearing and can retain substantially the same dimensional size and shape during and after removal until complete solidification. The removal of the fused article from the receiving surface near or above the Vicat temperature is a definitely preferred feature of materials in accordance with the present invention, in that it provides obvious advantages in high-speed, commercial production processes for polymeric articles. However, it should be understood that processes involving removal of the polymeric article from the support below the Vicat temperature are also contemplated and included within the scope of the present invention.


**Claims**

1. A heat-fusible flowable particulate material from which fused polymeric articles can be produced, said material comprising a predominant component in the form of a heat-fusible flowable substantially non-agglomerating polymeric powder, said material being characterised by the addition to said predominant component of at least one secondary component in the form of a polymeric powder which is miscible or reactive with the predominant component, upon application of heat to the mixture at or above the fusion temperature of the predominant component, so as to form a solution with the predominant component at the interfaces between the particles of the predominant and secondary components, the ratio of the secondary component(s) to the predominant component determining the adhesiveness and/or stiffness of the fused articles produced.

2. Material according to Claim 1 characterised in that the quantities of the secondary polymeric component are such that there is a detectable difference in stiffness and/or adhesive capabilities between the predominant polymeric component without the secondary polymeric component and the predominant polymeric component with the secondary polymeric component added.

3. Material according to Claim 1 or Claim 2 characterised in that the secondary component is in quantities up to 50 percent by weight of the material.

4. Material according to any one of the preceding Claims characterised in that the predominant component is a nonionomeric polyolefin, an ionomeric polymeric component or a mixture of these.

5. Material according to any one of the preceding Claims characterised in that the secondary polymeric component is constituted by a copolymer of ethylene and methacrylic and/or acrylic acid whereby to increase adhesiveness of the material.

6. Material according to any one of Claims 1 to 4 characterised in that the secondary component is constituted by a polyamide, whereby to increase the stiffness of the material.

7. Material according to any one of the preceding Claims characterised in that the predominant polymeric component and the secondary polymeric component(s) are both formed as one or more domains within the material, said domains being miscible or reactive together at the interface therebetween at the fusion temperature of the predominant component.